Europäisches Patentamt

(19) European Patent Office

Office européen des brevets

(11) Numéro de publication: **0 162 793**

**B1**

(12) **FASCICULE DE BREVET EUROPÉEN**

(45) Date de publication du fascicule du brevet:
12.10.88

(21) Numéro de dépôt: **85420089.6**

(22) Date de dépôt: **09.05.85**

(51) Int. Cl.⁴: **F 16 H 5/02**

(54) **Dispositif pour actionner une boîte à vitesses dont la synchronisation est pilotée par un calculateur électronique.**

(30) Priorité: **14.05.84 FR 8407829**

(43) Date de publication de la demande:
**27.11.85 Bulletin 85/48**

(45) Mention de la délivrance du brevet:
**12.10.88 Bulletin 88/41**

(84) Etats contractants désignés:
**BE DE GB IT NL SE**

(56) Documents cité:
**EP-A-0 085 498**
**BE-A-352 318**
**DE-C-704 328**
**FR-A-2 417 689**
**US-A-2 567 603**

(73) Titulaire: **RENAULT VEHICULES INDUSTRIELS
Société dite:, 129 Rue Servient, F-69003 Lyon (FR)**

(72) Inventeur: **Sibeud, Jean- Paul, Quartier Sous Vigne
Chaponnay, F-69360 St Symphorien D'Ozon (FR)**
Inventeur: **Ellenberger, Gérard, "le Fayet"
Valencin, F-38540 Heyrieux (FR)**

(74) Mandataire: **Maisonnier, Jean, Bureau Maisonnier
28 Rue Servient, F-69003 Lyon (FR)**

## Description

La présente invention est relative à un dispositif pour actionner une boîte à vitesses mécanique, et notamment pour synchroniser les couples de pignons des différents rapports, avant d'enclencher les crabots des baladeurs.

Traditionnellement, la synchronisation de la vitesse de rotation de deux pignons avant de les enclencher, est assurée par des organes mécaniques utilisant les phénomènes de friction, et connus sous le nom de synchroniseurs. On sait que les synchroniseurs mécaniques, comportant généralement des bagues de friction, présentent divers inconvénients notamment en ce qui concerne leur efficacité, et surtout leur encombrement. De plus, ils introduisent une complication mécanique importante dans la structure de la boîte à vitesses, comme, par exemple, selon le brevet US-A-2 567 603.

La présente invention a pour but de supprimer ces inconvénients, en réalisant un dispositif susceptible d'assurer la synchronisation des couples de pignons, au moment de leur commutation, grâce à des moyens entièrement électroniques.

On connaît par exemple par le brevet français 2 417 689, et par sa première addition 2 431 642, un procédé qui consiste à débrayer rapidement, pour dégager la vitesse engagée, pour embrayer à nouveau aussitôt, juste après l'obtention du point mort. A partir de là, on fait varier la vitesse du moteur, et, par conséquent, celle du pignon qui reste embrayé, pour amener ce pignon à la vitesse de synchronisme désiré. Aussitôt ce résultat obtenu, on effectue le crabotage entre les deux arbres de la boîte à vitesses.

En fait, on constate que la précision de la manoeuvre de changement de vitesse, aussi bien en ce qui concerne le choix du moment, que la rapidité du déroulement de l'opération, dépend de trois paramètres principaux, a savoir:

- $\alpha$ = rapport entre la vitesse angulaire d'entrée de la boîte à vitesses, et la vitesse angulaire de sortie de la boîte à vitesses;

- U = vitesse de variation de $\alpha$ pendant la phase de synchronisation, c'est-à-dire vitesse de convergence vers le synchronisme pendant la phase de synchronisation:

- T = temps nécessaire à l'actionneur pour exécuter le crabotage après en avoir reçu l'ordre.

Ceci étant, si l'on appelle $\alpha_c$, la valeur du ratio $\alpha$ à laquelle doit être donné l'ordre de craboter pour que l'opération se réalise, alors que le ratio $\alpha_m$ est le rapport de boîte à craboter, on constate en pratique que:

- $\alpha$ est connu avec une certaine imprécision;
- U ne peut pas être calculé exactement, et varie pendant toute la phase de synchronisation;
- T n'est pas constant d'une opération à l'autre.

En définitive, l'erreur que l'on peut commettre est fonction des trois grandeurs $\alpha$, U, T. On constate qu'on améliorerait la précision du crabotage au synchronisme, en réduisant T.

En particulier, si la durée T devenait plus courte que les intervalles de calcul de $\alpha$ et U, c'est-à-dire $\Delta$ T, la procédure se simplifierait, parce que l'ordre de craboter doit être émis à un instant permettant de craboter juste un peu avant l'obtention du synchronisme.

La présente invention a pour but de réaliser ces améliorations et de permettre notamment de toujours obtenir le contact des crabots avec le synchronisme, mais avec une vitesse différentielle suffisamment faible et que la force assurant ce contact soit limitée et ne risque d'engendrer aucune détérioration des crabots.

On comprend l'avantage d'une telle solution qui permet de passer les vitesses "au vol", c'est-à-dire en un temps très court, et pratiquement sans faire patiner l'embrayage dont la tenue en endurance se trouve d'autant améliorée.

Un dispositif selon l'invention vise à réaliser les opérations qui viennent d'être décrites, grâce à une structure simple, et sans présenter les inconvénients auxquels conduisent les éléments constitutifs connus, tels que décrits par exemple, dans le brevet US-A-2 567 603. En effet, diverses tentatives avaient été faites, en utilisant notamment, des vérins pneumatiques à double effet, pour déplacer les réglettes et fourchettes de commutation commandant les baladeurs de la boîte à vitesses. L'expérience a montré que, quel que soit le mouvement effectué, le volume mort d'un vérin à double effet est égal au volume utile de la course de travail. De plus, lorsqu'on remplit l'une des deux chambres d'un vérin à double effet, on vide l'autre, ce qui introduit une résistance dynamique aux déplacements du piston. Pour ces différentes raisons, il s'est avéré que le vérin à double effet est une solution incompatible avec une action rapide.

La présente invention vise à éviter ces inconvénients. Un dispositif selon l'invention, destiné à actionner les crabots des baladeurs d'une boîte à vitesses, après avoir synchronisé les couples de pignons correspondants, comprenant au moins un système à vérin sur chaque réglette coulissante de la boîte, ainsi que des électro-vannes commandées à partir d'un calculateur électronique, pour sélectionner et actionner les vérins, dans un sens ou dans l'autre, chaque système à vérins comprenant deux pistons opposés 9, 12, ou 36, 37, reliés tous deux à la réglette et à sa fourchette 1, chaque piston 9, 12, ou 36, 37 coulissant dans son propre cylindre 16, 30 ou 38, 44, alors que les tiges des pistons 9 et 12 sont aussi parallèles à la direction de déplacement de la fourchette 1 (flèche 61), est caractérisé en ce que chaque piston 9, 12 est repoussé contre le fond fixe 17, 15 de son cylindre 16, 30, par un ressort de rappel 15, 27, tandis que les tiges 8, 11 des deux pistons 9, 12 sont orientées parallèlement l'une à l'autre, reliées entre elles par articulation des extrémités d'un levier 4, dont la partie centrale est directement raccordée à la fourchette 1 de commande de boîte.

Suivant une autre caractéristique de l'invention, chaque piston est repoussé contre le fond fixe de son cylindre, par un ressort de rappel, tandis que les tiges des deux pistons sont orientées parallèlement l'une à l'autre, reliées entre elles par articulation des extrémités d'un levier dont la partie centrale est directement raccordée à la fourchette de commande de boîte.

Suivant une autre caractéristique de l'invention, les deux pistons antagonistes sont directement solidaires des extrémités de la même réglette, chacun d'eux coulissant de façon étanche dans le même cylindre qu'un contre-piston passif qu'une contre-pression amène et maintient en butée avant que ne soit déclenché le mouvement du piston correspondant, réduisant ainsi l'espace mort à néant.

Le dessin annexé, donné à titre d'exemple non limitatif, permettra de mieux comprendre les caractéristiques de l'invention.

Figure 1 est une vue schématique illustrant le principe d'une première réalisation possible de l'invention.

Figure 2 correspond à une autre variante de réalisation.

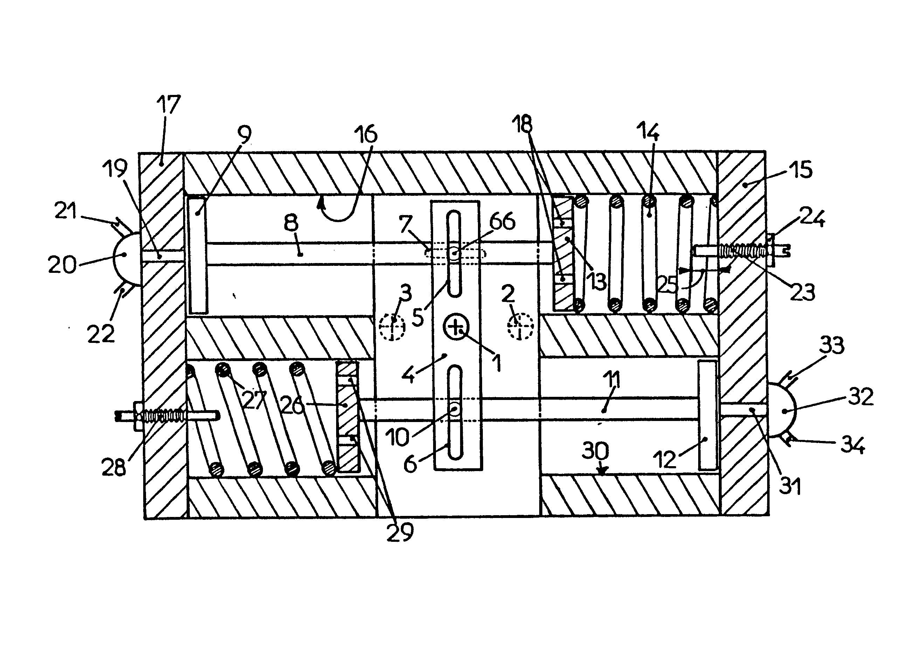

Dans la variante illustrée sur la figure 1, on a représenté, vue de dessus, une fourchette 1, commandant, à la manière connue, le crabot d'une boîte à vitesses. La manoeuvre de changement de vitesse, consiste à faire passer la fourchette 1, illustrée à sa position de point mort:
- soit à la position 2, pour laquelle elle crabote un pignon;
- soit à la position 3, pour laquelle elle crabote le pignon d'un autre rapport de vitesses.

La fourchette 1 est solidaire de la partie centrale d'un levier 4, dont les extrémités comportent, chacune, une ouverture allongée 5, 6, orientée longitudinalement.

L'ouverture 5 est traversée par un axe 66, engagé par ailleurs en travers d'une autre ouverture allongée 7, laquelle est disposée longitudinalement dans la tige 8 d'un piston coulissant 9. Les deux ouvertures allongées 5 et 6 sont orthogonales l'une à l'autre, lorsque l'ensemble est en position de repos.

Sur l'autre extrémité, le levier 4 est relié par un axe 10, traversant son ouverture allongée 6, à la tige 11 d'un deuxième piston 12, opposé au premier piston 9.

Le premier piston 9 et sa tige 8 sont montés en opposition par rapport au second piston 12 et à sa tige 11; autrement dit, les éléments 8 et 9 sont symétriques des éléments 11 et 12, par rapport au point central matérialisé par la fourchette 1, lorsque l'ensemble est au repos.

A l'opposé du piston 9, la tige 8 est solidaire d'un poussoir 13, qui prend appui sur un ressort de compression 14, portant contre une paroi transversale fixe 15.

L'ensemble du piston 9 et du poussoir 13 coulisse à l'intérieur d'un cylindre fixe 16, fermé, derrière le ressort 14, par la plaque 15, et, devant le piston 9, par une plaque analoque 17. Le piston 9 coulisse de façon étanche dans le cylindre 16.

Au contraire, des évents 18 sont prévus à travers le poussoir 13, pour éviter toute compression de l'air au niveau du ressort 14.

Face au piston 9, la plaque 17 est percée d'un orifice d'alimentation 19, qu'une électro-vanne 20 permet de relier, à volonté, à une canalisation 21 alimentée en air comprimé, soit à une canalisation 22, qui s'ouvre directement sur l'atmosphère extérieure.

Au centre du resort hélicoïdal 14, la plaque 15 comporte une vis de butée, pourvue d'un contre écrou de blocage 24. Cette disposition permet de régler la longueur 25 dont la vis 23 dépasse, à l'intérieur du disposisitif, où elle peut servir de butée au poussoir 13, lorsque celui-ci a complètement comprimé le ressort 14.

Le piston 12 et sa tige 11 sont équipés de façon tout à fait symétrique, c'est-à-dire que l'extrémité opposée de la tige 11 se termine par un poussoir 26 comprimant un ressort 27, face à une vis de butée réglable 28. Des évents 29 traversent le poussoir 26 pour éviter toute compression de l'air autour du ressort 27. Par contre, le piston 12 coulisse de façon étanche dans l'alésage 30 qu'une canalisation 31 relie à une électro-vanne 32. Celle-ci peut être mise en communication à volonté, soit avec une canalisation d'arrivée de pression 33, soit avec une canalisation 34 débouchant sur l'atmosphère extérieure.

Le fonctionnement est le suivant:

La position illustrée sur la figure 1 est la position neutre au repos, définie par les pistons 9 et 12, maintenus en butée à fond de cylindre, par les ressorts 14 et 27. Pour cette position de la fourchette 1, la boîte à vitesses se trouve au point mort.

Le réglage de cette position s'effectue en dèplaçant le pivot 6.

La fourchette 1 est amenée à la position 2, lorsque l'électro-vanne 20 envoie la pression sur le piston 9, qui comprime le ressort 14 jusqu'à venir en butée sur la vis 23 qui limite sa course.

La position 3 de la fourchette 1 est obtenue lorsque la pression est envoyée à l'électro-vanne 32 sur le piston 12, dont la course est limitée par la vis de butée 28.

Grâce à la présence des ouvertures allongées 5 et 6, recevant les axes des pivots 6 et 10, on peut faire en sorte que les trois positions 1, 2, 3 de la fourchette soient réparties sur une ligne droite, sur un arc de cercle, ou sur toute autre trajectoire.

Lorsque l'une ou l'autre des électro-vannes 20, 32, est reliée à l'échappement 22, 34, les ressorts 14 et 27 tendent à ramener le mécanisme en position neutre.

Si, à partir de la position de point mort illustrée sur la figure 1, l'électro-vanne 20 envoie la pression sur le piston 9, celui-ci réagit immédiatement, puisque l'espace mort qui le surmonte a un volume pratiquement nul. Il comprime aussitôt le ressort 14 qui vient s'arrêter en butée sur la vis 23. Le pivot 6 déplace alors l'extrémité correspondante du levier 4, ce qui déplace la fourchette 1 en direction de la position 2. Deux cas sont alors possibles:

- ou bien, il n'y a pas de résistance au niveau de la fourchette 1, et le levier 4 pivote autour du pivot 10 qui reste alors immobile; cela a pour effet d'amener la fourchette 1 à la position 2;

- ou bien, la fourchette 1 rencontre une forte résistance, auquel cas le pivot 10 repousse l'attelage 12, 11, 26, à l'encontre du ressort 27, qui se comprime. La réaction correspondante du ressort 27 tend à envoyer la fourchette 1 vers la position 2. C'est cette force, indépendante de la pression d'alimentation en 21, mais définie par le ressort 27, qui assure le contact entre les dents des crabots dans la courte période de présynchronisme.

On remarque alors que:

1°) pour comprimer le ressort 27, il faut faire reculer le piston 12, qui va aspirer du fluide à travers l'électro-vanne 32, alors en position d'échappement. En dynamique, l'effort sur la fourchette 1 sera celui qui résulte de la poussée du ressort 27, augmenté de l'effet dynamique du piston 12.

2°) l'indexage de la position de point mort de la fourchette 1 sur la réglette de la boîte à vitesses sera conservé à cause des imprécisions dues au jeu des pivots 6 et 10, ainsi que des autres liaisons. Cependant, l'effort nécessaire à l'effacement de cet indexage sera plus faible que le pré-tarage des ressorts 14 et 27, qui sont eux-mêmes établis en fonction de l'effort de contact désiré au niveau des dents des crabots.

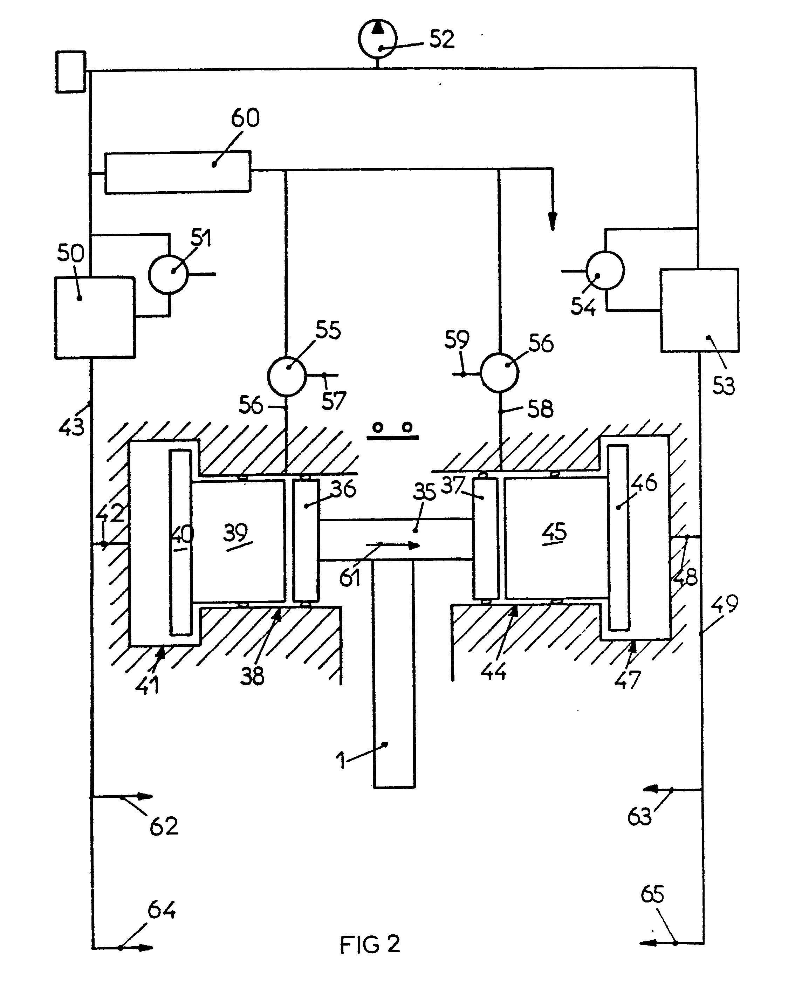

La variante illustrée sur la figure 2 constitue une solution de compromis dont la structure est encore plus simple que celle de la figure 1. En effet, la réglette 35 de la fourchette 1 est directement solidaire, à chacune de ses deux extrémités, d'un piston, respectivement 36 et 37. Ces derniers correspondent respectivement aux pistons 9 et 12 de la figure 1.

Le piston 36 coulisse, de façon étanche, dans un alésage 38, face à un contre-piston coulissant également étanche 39, pourvu d'une tête élargie 40.

Cette tête 40 est mobile dans un alésage 41 relié par une canalisation 42 à une ligne d'alimentation en pression 43.

A l'opposé, le piston 37 coulisse de façon étanche dans un alésage 44, face à un contre-piston coulissant étanche 45, dont la tête élargie 46 se déplace dans un alésage 47. Ce dernier est relié par une canalisation 48, à une ligne d'alimentation sous pression 49.

Une électro-vanne de point mort 50 à gros débit, pilotée par une électro-vanne 51, permet de relier la ligne d'alimentation 43 à une source d'air comprimé 52. De même, une électro-vanne à gros débit 53 pilotée par une électro-vanne 54, permet de relier la ligne de point mort 49 à la source d'air comprimé 52.

En parallèle sur la source d'air comprimé 52, sont montées deux électro-vannes d'engagement 55 et 56. Dans l'exemple illustré, l'électro-vanne 55 (commandant, par exemple, la marche arrière), permet d'envoyer la pression dans une canalisation 56, débouchant dans l'alésage 38, entre les pistons 36 et 39, ou bien au contraire, de relier la canalisation 56 à une canalisation d'échappement 57, communiquant avec l'atmosphère extérieure.

De même, l'électro-vanne 56 permet de relier la canalisation 58 de l'espace mort pratiquement sans volume entre les pistons 37 et 45, soit à la source d'air comprimé, soit à une canalisation 59 de mise à l'atmosphère.

Le fonctionnement est le suivant:

Toute opération de changement de rapport débute par la mise au point mort de la boîte à vitesses. Le délai nécessaire à cette action n'est pas critique, puisque les opérations ne débutent que lorsque la position est atteinte.

Lorsqu'on excite l'électro-vanne 51 et 54 qui pilote les vannes à gros débit 50, 53, on assure le remplissage des chambres de neutre qui repoussent les contre-pistons 30, 45, jusqu'à ce que leurs têtes élargies 40, 46 viennent en butée comme illustré sur la figure 2. Ceci assure un remplissage rapide et un maintien en appui sous la pression maxima du réseau, de celui des deux contre-pistons 39 ou 45, qui sera opposé au déplacement choisi dans les phases suivantes.

Une fois atteinte la position de point mort, un contact de détection, non représenté, se ferme, et le calculateur électronique ainsi informé peut mettre en vidange les chambres situées d'un même côté 43 ou 49. Par exemple, seront ainsi mises en vidange, toutes les chambres telles que celles de la tête 46, qui correspondent à la canalisation 49 gouvernée par l'électro-vanne 54. La vidange de ces chambres sera terminée lorsque la synchronisation sera obtenue, parce que l'ouverture de la vanne opposée, par exemple 55, commence avec le début de la synchronisation.

Un peu avant que l'on arrive au synchronisme, l'électro-vanne 5 choisie pour engager le rapport sélectionné, est ouverte pour alimenter avec une pression d'engagement régulée par un régulateur 60, la chambre à espace pratiquement nul située entre le piston 36 et son contrepiston 39. La pression d'engagement définie par le régulateur 60 à une valeur inférieure à la pression de neutre qui règne dans les canalisations 43 et 49. Cette pression prépondérante maintient la tête 40 du contre-piston 39 en butée à la position illustrée sur la figure 2, si bien que l'alimentation de la canalisation 56 à la pression d'engagement définie par le régulateur 60, a pour effet de chasser vers la droite (flèche 61), l'ensemble de la réglette 35 et de la fourchette 1. La montée en pression dans la chambre définie entre le piston 36 et son contre-piston 39 est très rapide, étant donné que l'espace mort a un volume pratiquement nul. Il en résulte que la force permettant de vaincre l'indexage de la bille de position neutre de la boîte à vitesses est très vite atteinte. Cela permet un démarrage très bref du mouvement d'engagement, et une prise de contact des dents des crabots avec une force définie par la pression d'engagement du régulateur 60. Lorsqu'on arrive au synchronisme, les crabots s'engagent.

Le calculateur électronique détecte alors que le rapport des vitesses entre l'entrée et la sortie de la boîte correspond au rapport sélectionné. Cela siginfie que le changement de rapport est terminé. Le calculateur coupe alors l'excitation des électro-vannes 55 et 51. Aucune vanne n'est plus excitée sur la boîte à vitesses et le cycle de changement de rapport est terminé.

Bien entendu, les canalisations 42 et 48 correspondent à un premier rail de commutation sur la boîte à vitesses. Les autres rails peuvent être définis entre les canalisations 43 et 49, par exemple par les canalisations 62 et 63, pour les rapports de première et de seconde, par des canalisations 64 et 65, pour les rapports de troisième et de quatrième.

**Revendications**

1. Dispositif destiné à actionner les crabots des baladeurs d'une boîte à vitesses, après avoir synchronisé les couples de pignons correspondants, comprenant au moins un système à vérin sur chaque réglette coulissante de la boîte, ainsi que des électro-vannes commandées à partir d'un calculateur électronique, pour sélectionner et actionner les vérins, dans un sens ou dans l'autre, chaque système à vérin comprenant deux pistons opposés (9, 12, ou 36, 37), reliés tous deux à la réglette et à sa fourchette (1), chaque piston (9, 12, ou 36, 37) coulissant dans son propre cylindre (16, 30 ou 38, 44) alors que les tiges des pistons (9 et 12) sont aussi parallèles à la direction de déplacement de la fourchette (1) (flèche 61), caractérisé en ce que chaque piston (9, 12) est repoussé contre le fond fixe (17, 15) de son cylindre (16, 30) par un ressort de rappel (15, 27), tandis que les tiges (8, 11) des deux pistons (9, 12) sont orientées parallèlement l'une à l'autre, reliées entre elles par articulation des extrémités d'un levier (4) dont la partie centrale est directement raccordée à la fourchette (1) de commande de boîte.

2. Dispositif suivant la revendication 1, caractérisé par des moyens antagonistes de rappel qui permettent de réduire pratiquement à néant, l'espace mort au-dessus du piston (9, 12, ou 36, 37), lorsque celui-ci est sur le point d'être actionné par un fluide sous pression.

3. Dispositif suivant la revendication 2, caractérisé en ce qu'à chaque extrémité, le levier (4) comporte une ouverture allongée (5, 6), orientée perpendiculairement à la tige (8, 11) correspondante à laquelle elle est reliée par un pivot (66, 10), coulissant dans ladite ouverture allongée (5, 6).

4. Dispositif suivant la revendication 1, caractérisé en ce, qu'un pivot (10) est solidaire d'une tige (11), alors que l'autre pivot (66) traverse, dans l'autre tige (8), une ouverture allongée longitudinale (7) dans laquelle il peut coulisser.

5. Dispositif suivant l'une quelconque des revendications 1, 3 et 4, caractérisé en ce que l'alimentation (19, 31) de chaque piston (9, 12) est commandée par une électro-vanne (20, 32), la reliant à volonté, soit à une source d'air comprimé (21, 33), soit à une canalisation de mise à l'atmosphère (22, 34).

6. Dispositif suivant l'une quelconque des revendications 1, 3, 4 et 5, caractérisé en ce que à l'opposé de son piston (9, 12), chaque tige (8, 11) comporte un poussoir (13, 26), comprimant le ressort (14, 27) et susceptible de venir en butée, en fin de course, contre une vis de butée réglable (23, 28).

7. Dispositif destiné à actionner les crabots des baladeurs d'une boîte à vitesses après avoir synchronisé les couples de pignons correspondants, comprenant au moins un système à vérin sur chaque réglette coulissante de la boîte, ainsi que des électro-vannes commandées à partir d'un calculateur électronique, pour sélectionner et actionner les vérins, dans un sens ou dans l'autre, chaque système à vérin comprenant deux pistons opposés (36, 37) reliés tous deux à la réglette et à sa fourchette (1), chaque piston (36, 37) coulissant dans son propre cylindre (38, 44), alors que les tiges des pistons (36, 37) étant parallèles à la direction de déplacement de la fourchette (1, flèche 61), caractérisé par des moyens antagonistes de rappel qui permettent de réduire pratiquement à néant l'espace mort au-dessus du piston (36, 37) lorsque celui-ci est sur le point d'être actionné par un fluide sous pression, tandis que les deux pistons antagonistes (36, 37) sont directement solidaires des extrémités de la même réglette (35), chacun d'eux coulissant de façon étanche dans le même cylindre (38, 44) qu'un contre-piston passif (39) (45) amené et maintenu en butée par une contre-pression envoyée par (42, 48) avant que ne soit déclenché le mouvement du piston (39 ou 45) correspondant, ce qui réduit ainsi l'espace mort à néant au début du mouvement.

8. Dispositif suivant la revendication 7 caractérisé en ce que chaque espace mort entre piston (36, 37) et contre-piston (39, 45) est alimenté par une canalisation (57, 58), en une pression d'air d'engagement qu'un régulateur (60) fixe à une valeur inférieure à celle de la contre-pression en (42, 48).

**Patentansprüche**

1. Vorrichtung zum Bedienen der Schieberadklauen eines Getriebes, nachdem die entsprechenden Ritzel miteinander synchronisiert worden sind, mit wenigstens einer Druckzylinderanordnung auf jeder im Getriebe gleitenden Schaltstange, sowie mit Elektroventilen, die durch einen elektronischen Rechner steuerbar sind zum Auswählen und Betätigen der Ventile in einer oder der anderen Richtung, wobei jede Druckzylinderanordnung zwei entgegengesetzte Kolben (9, 12) oder (36, 37) aufweist, die jeweils mit der Schaltstange und ihrer Schaltgabel (1) verbunden sind und wobei jeder Kolben (9, 12 oder 36, 37) in seinem eigenen Zylinder (36, 30 oder 38, 44) gleitet, während die Stangen der Kolben (9 und 12) ebenfalls parallel zur Verschieberichtung der Schaltgabei (1) (Pfeil 61) sind, dadurch gekennzeichnet, daß jeder Kolben (9, 12) durch eine Rückholfeder (15, 27) gegen den feststehenden Boden (17, 15) seines Zylinders (16, 30) gedrückt wird, während die Stangen (8, 11) der beiden Kolben (9, 12) parallel zueinander ausgerichtet sind und miteinander durch Gelenke an den Enden eines Hebels (4) verbunden sind, dessen Mittenabschnitt direkt mit der Schaltgabel (1) des Getriebes Verbunden ist.

2. Vorrichtung nach Anspruch 1, gekennzeichnet durch eine entgegen wirkende Rückholanordnung, die den toten Raum oberhalb der Kolben (9, 12 oder 36, 37) praktisch auf Null reduziert, wenn letzterer an dem Punkt angelangt ist, in dem er durch ein unter Druck stehendes Fluid batätigt wird.

3. Vorrichtung nach Anspruch 2, dadurch gekennzeichnet, daß an jedem Ende des Hebels (4) eine langgestreckte Öffnung (5, 6) vorgesehen ist, die sich senkrecht zur zugehörigen Stange (8, 11) erstreckt, mit der sie über einen Zapfen (66, 10) verbunden ist, der in der langgestreckten Öffnung (5, 6) gleitet.

4. Vorrichtung nach Anspruch 1, dadurch gekennzeichnet, daß ein Zapfen (10) fest mit einer Stange (11) verbunden ist, während der andere Zapfen (66) in der anderen Stange (8) eine langgestreckte Längsöffnung (7) durchsetzt, in der er gleiten kann.

5. Vorrichtung nach einem der Ansprüche 1, 3 und 4, dadurch gekennzeichnet, daß die Versorgung (19, 31) eines jeden Kolbens (9, 12) durch ein Elektroventil (20, 32) gesteuert wird, das sie beliebig entweder mit einer Druckluftquelle (21, 33) oder aber mit einer mit der Umgebung in Verbindung stehenden Leitung (22, 34) verbindet.

6. Vorrichtung nach einem der Ansprüche 3, 4 und 5, dadurch gekennzeichnet, daß dem Kolben (9, 12) gegenüberliegend jede Stange (8, 11) einen Schieber (13, 26) aufweist, der die Feder (14, 27) zusammendrückt und am Ende des weges sich auf einer einstellbaren Anschlagschraube (23, 28) abstützen kann.

7. Vorrichtung zum Bedienen der Schieberadklauen eines Getriebes, nachdem die entsprechenden Ritzel miteinander synchronisiert worden sind, mit wenigstens einer Druckzylinderanordnung auf jeder im Getriebe gleitenden Schaltstange sowie mit Elektroventilen, die durch einen elektronischen Rechner steuerbar sind, zum Auswählen und Betätigen der Ventile in einer oder der anderen Richtung, wobei jede Druckzylinderanordnung zwei entgegengesetzte Kolben (36, 37) aufweist, die jeweils mit der Schaltstange und ihrer Schaltgabel (1) verbunden sind, wobei jeder Kolben (36, 37) in seinem eigenen Zylinder (38, 44) gleitet während die Stangen der Kolben (36, 37) parallel zur Verschieberichtung der Schaltgabel (1) sind (Pfeil 61), gekennseichnet durch eine entgegen wirkende Rückholanordnung, die es ermöglicht, den toten Raum oberhalb des Kolbens (36, 37) praktisch auf Null zu reduzieren, wenn letzterer an demjenigen Punkt ist, an dem or durch ein unter Druck stehendes Fluid betätigt wird, während die beiden entgegenwirkenden Kolben (36, 37) direkt mit den Enden der gleichen Schaltstange (35) fest verbunden sind, wobei jeder von ihnen in dichter Weise in dem gleichen Zylinder (38, 44) gleitet wie ein passiver Gegenkolben (39, 45), der geführt und im Anschlag gehalten wird durch einen Gegendruck von (42, 48) bevor noch die Bewegung des zugehörigen Kolbens (39, 45) eingeleitet wird, wodurch der tote Raum zu Beginn der Bewegung auf Null reduziert wird.

8. Vorrichtung nach Anspruch 7, dadurch gekennzeichnet, daß jeder Totraum zwischen dem Kolben (36, 37) und dem Gegenkolben (39, 45) über eine Leitung (57, 58) mit Betätigungsluft beaufschlagt wird, deren Druck von einem Regler (60) auf einen Wert bestimmt wird, der kleiner als derjenige des Gegendrucks bei (42, 48) ist.

## Claims

1. An arrangement for actuating the dogs of the sliding members of a gearbox, after having synchronized the corresponding pairs of pinions, comprising at least one jack system on each sliding control member of the box and electrically operated valves which are controlled from an electronic computer for selecting and actuating the jacks in one direction or the other, each jack system comprising two opposite pistons (9, 12 or 36, 37) which are both connected to the control member and to its fork (1), each piston (9, 12 or 36, 37) sliding in its own cylinder (16, 30 or 38, 44) while the rods of the pistons (9 and 12) are also parallel to the direction of displacement of the fork (1) (arrow 61) characterized in that each piston (9, 12) is pushed back against the fixed end (17, 15) of its cylinder (16, 30) by a return spring (15, 27) while the rods (8, 11) of the two pistons (9, 12) are oriented parallel to each other, and are connected to each other by pivotal connection of the ends of a lever (4) of which the central part is directly connected to the box control fork (1).

2. An arrangement according to claim 1 characterized by counteracting return means which make it possible to reduce practically to zero the dead space above the piston (9, 12 or 36, 37) when same is on the point of being actuated by a fluid under pressure.

3. An arrangement according to claim 2 characterized in that at each end the lever (4) comprises an elongate opening (5, 6) oriented perpendicularly to the corresponding rod (8, 11) to which it is connected by a pivot (66, 10) sliding in said elongate opening (5, 6).

4. An arrangement according to claim 1 characterized in that one pivot (10) is fixed with respect to one rod (11) while the other pivot (66) passes, in the other rod (8), through a longitudinal elongate opening (7) in which the pivot is slidable.

5. An arrangement according to any one of claims 1 to 4 characterised in that the feed (19, 31) for each piston (9, 12) is controlled by an electrically operated valve (20, 32) connecting it as desired either to a compressed air source (21, 33) or to a conduit (22, 34) for communication with the atmosphere.

6. An arrangement according to any one of claims 1, 3, 4 and 5 characterized in that opposite its piston (9, 12) each rod (8, 11) comprises a thrust member (13, 26) compressing the spring (14, 27) and coming to bear at the end of the travel movement against an adjustable abutment screw (23, 28).

7. An arrangement for actuating the dogs of the sliding members of a gearbox, after having synchronized the corresponding pairs of pinions, comprising at least one jack system on each sliding control member of the box, and electrically operated valves which are controlled from an electronic computer for selecting and actuating the jacks in one direction or the other, each jack system comprising two opposite pistons (36, 37) which are both connected to the control member and to its fork (1), each piston (36, 37) sliding in its own cylinder (38, 44) while the rods of the pistons (36, 37) being parallel to the direction of displacement of the fork (1, arrow 61), characterized by counteracting return means which make it possible to reduce practically to zero the dead space above the piston (36, 37) when same is on the point of being actuated by a fluid under pressure while the two counteracting pistons (36, 37) are directly fixed with respect to the ends of the same control member (35), each of them sliding sealingly in the same cylinder (38, 44) as a passive counter-piston (39, 45) moved into and maintained in a condition of abutment by a counter-pressure passed by (42, 48) before movement of the corresponding piston (39 or 45) is initiated, thereby reducing the dead space to nothing at the beginning of the movement.

8. An arrangement according to claim 7 characterized in that each dead space between piston (36, 37) and counter-piston (39, 45) is fed by a conduit (57, 58) with an engagement air pressure that a regulator (60) fixes at a value lower than that of the counter-pressure in (42, 48).

FIG 2